# EUROPEAN PATENT APPLICATION

(11) **EP 1 513 231 A1**
(43) Date of publication of application: **09.03.2005**
(21) Application number: 04012789.6
(22) Date of filing: 28.05.2004
(51) Int. Cl.: H01S 3/067, H01S 3/094

(54) **Broadband light source with dual-port structure**

(30) Priority: 02.09.2003 KR 2003061252
(71) Applicant: Samsung Electronics Co., Ltd., Suwon-si, Gyeonggi-do 442-742 (KR)
(72) Inventor: Hwang, Seong-Taek, Yeongtong-gu Suwon-si Gyeonggi-do (KR); Kim, Sang-Ho, Yeongtong-gu Suwon-si Gyeonggi-do (KR); Shim, Chang-Sup, Yeongtong-gu Suwon-si Gyeonggi-do (KR); Oh, Yun-Je, Yeongtong-gu Suwon-si Gyeonggi-do (KR)
(74) Representative: Grünecker, Kinkeldey, Stockmair & Schwanhäusser Anwaltssozietät

(57) **Abstract**

A broadband light source (200) with a dual port structure includes a gain medium (210) pumped by inputted pump light (260,265) for outputting ASE light (270,275) through both terminals thereof, and a pumping section (230,235) for pumping the gain medium (210). The broadband light source (200) outputs ASE light (270,275), which is outputted from both terminals of the gain medium (210), to an exterior through first and second output terminals (250,255).

## Description

### BACKGROUND OF THE INVENTION

### 1. Field of the Invention

The present invention relates to an optical module, and more particularly to a broadband light source for outputting light of a wide wavelength band.

### 2. Description of the Related Art

A light source having a wide wavelength band is necessary for measuring optical characteristics of various devices used in optical communication. Particularly, when using an EDFA (Erbium Doped Fiber Amplifier) in optical communication systems, the wavelength band of an optical signal for communication is 1520 to 1620 nm. Therefore, the light source must be suited to measuring characteristics of various optical devices in the wavelength band of from 1520 to 1620 nm. Also, a broadband light source, which is used with an injection locked laser diode, is used as a light source for allowing subscribers to simultaneously access a WDM-PON (Wavelength Division Multiplexing Passive Optical Network), which is a next-generation ultrahigh speed optical access network. As a conventional broadband light source, a white light source or ASE light (Amplified Spontaneous Emission light) of the EDFA is mainly used. However, because the white light source has a low output, the white light source cannot be used as the light source for the WDM-PON requiring a high-level output. The white light source is also limited in its measuring of optical device characteristics. As for the EDFA, it is very expensive.

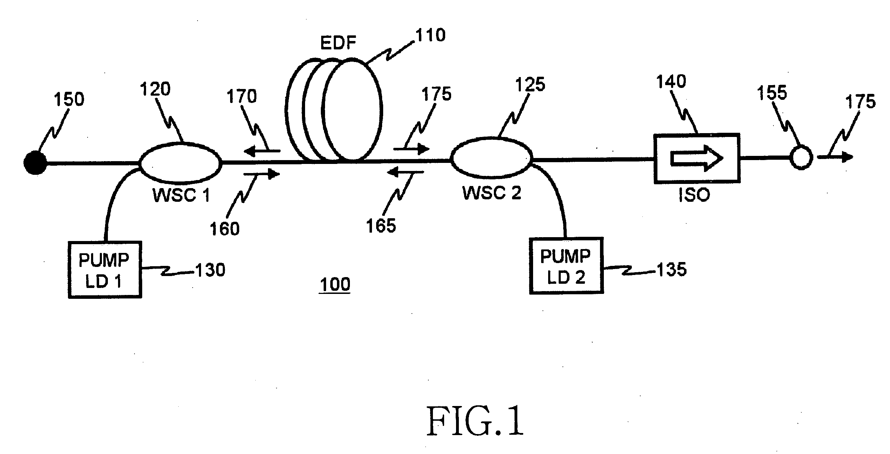

FIG. 1 is depicts the structure of a conventional broadband light source 100. The broadband light source 100 includes an EDF (Erbium Doped Fiber) 110, first and second WSCs (Wavelength-Selective Couplers) 120, 125, first and second pump LDs (Laser Diode) 130, 135, and an ISO (isolator) 140. The first and second pump LDs 130, 135 output pump lights 160, 165 having a predetermined wavelength. The first and second WSCs 120, 125 output pump lights 160, 165, which are radiated from the first and second pump LDs 130, 135 into the EDF 110. The EDF 110 is pumped in both directions thereof by means of the pump lights 160, 165 so as to output ASE lights 170, 175 through both terminals of the EDF 110. ASE light 175, which has been outputted forward of the EDF 110, is outputted to an exterior through an output terminal 155 of the broadband light source 100 after passing through the second WSC 125 and the ISO 140. ASE light 170, which has been outputted in a backward direction of the EDF 110 extinguishes after being inputted into a termination 150 of the broadband light source 100 through the first WSC 120.

Because only one of the ASE lights, which have been outputted from both terminals of the rare-earth element doped optical fiber such as the EDF, is outputted to the exterior, the conventional broadband light source utilizing such an optical fiber is inefficient.

### SUMMARY OF THE INVENTION

The present invention has been made to solve the above-mentioned problems occurring in the prior art, and an object of the present invention is to provide a broadband light source capable of measuring characteristics of optical devices and adapted for a WDM-PON, owing to great intensity of output light and high output efficiency thereof.

In order to accomplish this object, there is provided a broadband light source having a dual port structure. The broadband light source includes a gain medium having two terminals. The gain medium is pumped by inputted pump light for outputting amplified spontaneous emission (ASE) light through both terminals. The light source further includes first and second output terminals leading to an exterior of the broadband light source. Also featured in the light source is a pumping section for the pumping of the gain medium. The broadband light source outputs the ASE light through the two terminals of the gain medium, through the first and second output terminals, and out to the exterior.

### BRIEF DESCRIPTION OF THE DRAWINGS

The above object, feature and advantage of the present invention will be more apparent from the following detailed description taken in conjunction with the accompanying drawings, in which:
FIG. 1 is a flow diagram showing a structure of a conventional broadband light source;
FIG. 2 is a flow diagram showing a structure of a broadband light source having a dual port structure according to a first embodiment of the present invention;
FIG. 3 is a flow diagram showing a structure of a broadband light source having a dual port structure according to a second embodiment of the present invention;
FIG. 4 is a flow diagram showing a structure of a broadband light source having a dual port structure according to a third embodiment of the present invention; and
FIG. 5 is a flow diagram showing a structure of a broadband light source having a dual port structure according to a fourth embodiment of the present invention.

### DETAILED DESCRIPTION OF THE PREFERRED EMBODIMENT

Preferred embodiments of the present invention are described below with reference to the accompanying drawings. In the following description of the present invention, detailed description of known functions and configurations is omitted for clarity of presentation.

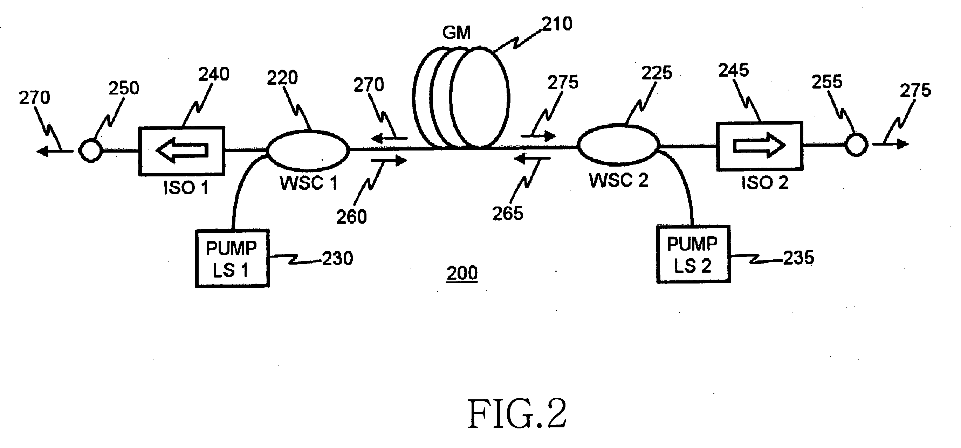

FIG. 2 is a view showing, by way of illustrative and non-limitative example, a broadband light source having a dual port structure according to a first embodiment of the present invention. A broadband light source 200 includes a gain medium 210, first and second WSCs 220, 225, first and second pump LSs (pump light source) 230, 235, and first and second ISOs 240, 245.

The first pump LS 230 outputs a first pump light 260 having a predetermined wavelength, and the first wavelength selective coupler 220 outputs the inputted first pump light 260 to the gain medium 210.

The second pump LS 235 outputs a second pump light 265 having a predetermined wavelength, and the second wavelength selective coupler 225 outputs the inputted second pump light 265 to the gain medium 210. The first and second pump LSs 230, 235 can include a laser diode and an LED (Light Emitted Diode).

The gain medium 210 is pumped in both directions thereof by the first and second pump lights 260, 265, and the gain medium creates and outputs ASE lights 270, 275 through both terminals of the gain medium. The gain medium 210 can include a rare-earth element doped optical fiber or a rare-earth element doped planar lightwave circuit. The rare-earth element doped optical fiber can include an erbium doped optical fiber, a thulium doped fiber, and a praseodymium doped fiber. The erbium doped optical fiber can be used in a wavelength band of 1520 ~ 1570 nm if a population inversion thereof becomes high as by shortening the optical fiber length or by increasing the pump light intensity. The erbium doped optical fiber can similarly be used in a wavelength band of 1520 ~ 1620 nm if a population inversion thereof becomes low as by increasing the fiber length or by decreasing light intensity. The thulium doped fiber can be used in a wavelength band of 1450 ~ 1510 nm, and the praseodymium doped fiber can be used in a wavelength band of 1270 ~ 1330 nm. The first and second pump lights 260, 265 have a wavelength capable of exciting the gain medium 210 according to the type of the gain medium. Thus, if the gain medium 210 is selected, for example, for wide gain spectrum at a usable wavelength band, first and second pump light sources 230, 235 may be selected that are capable of exciting the gain medium 210 according to a desired usable wavelength band of the broadband light source 200.

The first and second ISOs 240, 245 allow lights inputted into one direction thereof to pass therethrough, while isolating lights inputted to the other direction thereof.

ASE light 275, which has been outputted forward of the gain medium 210, is outputted to an exterior through a second output terminal 255 of the broadband light source 200 after passing through the second WSC 225 and the ISO 245. ASE light 270, which has been outputted in a backward direction of the gain medium 210, is outputted to the exterior through a first termination 250 of the broadband light source 200 after passing through the first WSC 220 and the first ISO 240.

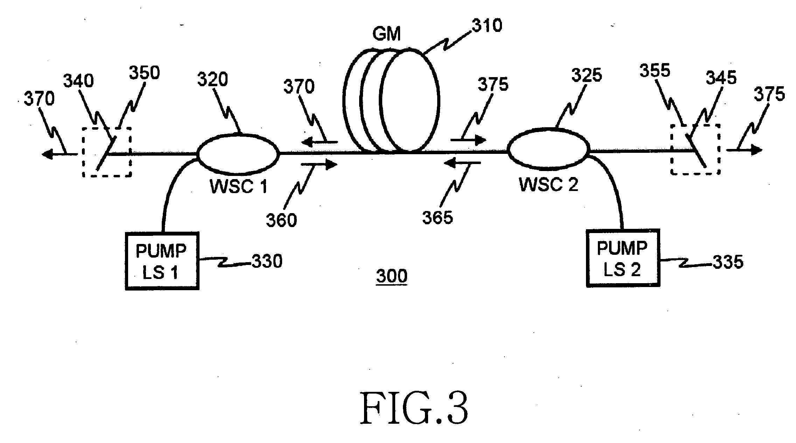

) FIG. 3 shows an exemplary dual port structure of a broadband light source according to a second embodiment of the present invention. A broadband light source 300 includes a gain medium 310, first and second WSCs 320, 325, first and second pump LSs 330, 335, and first and second connectors 340, 345. The broadband light source 300 has, instead of first and second ISOs 240, 245 shown in FIG 2, the first and second connectors 340, 345. The first pump light source 330 outputs a first pump light 360 having a predetermined wavelength, and the first WSC 320 outputs the inputted pump light 360 to the gain medium 310.

The second pump light source 335 outputs a second pump light 365 of the predetermined wavelength, and the second WSC 325 outputs the inputted second pump light 365 to the gain medium 310.

The gain medium 310 is pumped in both directions thereof by the first and second pump lights 360, 365, and the gain medium 310 creates and outputs ASE lights 370, 375 through both terminals of the gain medium 310. ASE light 375, which has been outputted forward of the gain medium 310, is outputted to the exterior through a second connector 345 installed in a second output terminal 355 of the broadband light source 300 after passing through the second WSC 325. ASE light 370, which has been outputted in a backward direction of the gain medium 310, is outputted to the exterior through a first connector 340 installed in a first output terminal 350 of the broadband light source 300 after passing through the second WSC 320. Each of the first and second connectors 340 and 345 has an optical fiber formed with an inclined tip portion. Since the tip portion of the optical fiber is inclined, an amount of light inputted into. the gain medium 310 after reflecting from the tip portion of the optical fiber is decreased. An inclined angle of the inclined tip portion may be set to the Brewster angle.

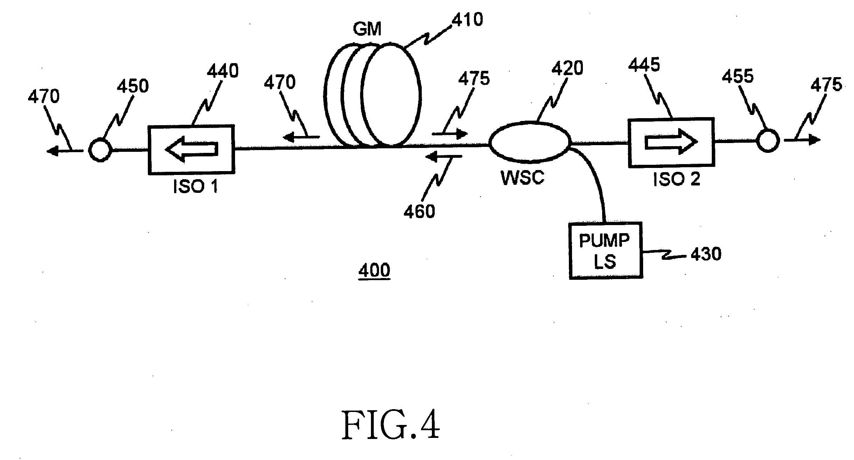

FIG. 4 portrays an exemplary broadband light source having a dual port structure according to a third embodiment of the present invention. A broadband light source 400 includes a gain medium 410, a WSC 420, a pump LS 430, and first and second ISOs 440, 445. The broadband light source 400 differs from the first embodiment of FIG. 2 in that the first WSC 220 and the first pump LS 230 are not present.

The first pump light source 430 outputs a pump light 460 having a predetermined wavelength, and the WSC 420 outputs the inputted pump light 460 to the gain medium 410.

The gain medium 410 is pumped in a reverse direction by the pump light 460, and outputs created ASE lights 470, 475 through both terminals of the gain medium 410.

ASE light 475, which has been outputted forward of the gain medium 410, is outputted to the exterior through a second output terminal 455 of the broadband light source 400 after passing through the WSC 420 and the second ISO 445. ASE light 470, which has been outputted in a backward direction of the gain medium 410, is outputted to the exterior through a first output terminal 450 of the broadband light source 400 after passing through the first ISO 440.

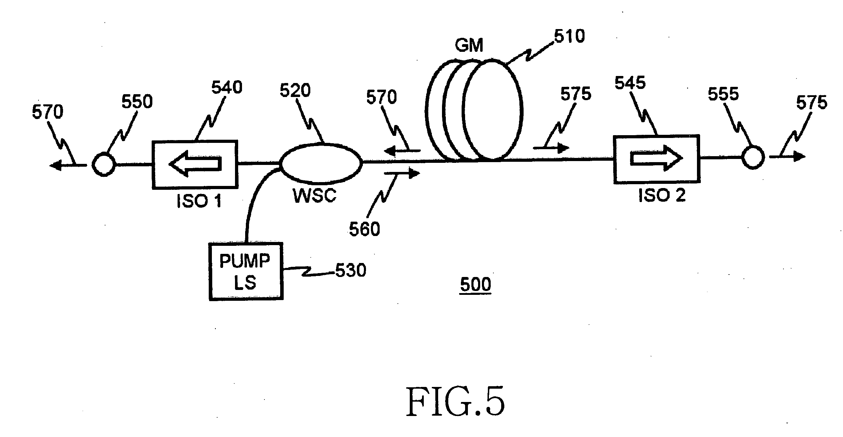

FIG. 5 is a view showing a structure of a broadband light source having a dual port structure according to a fourth embodiment of the present invention. A broadband light source 500 includes a gain medium 510, a WSC 520, a pump LS 530, and first and second ISOs 540, 545. The fourth embodiment differs from the third embodiment of FIG. 4 in that a pump LS 530 for forward pumping and corresponding WSC 520 are provided instead of the pump LS 430 for reverse pumping and its corresponding WSC 420.

In particular, the first pump light source 530 outputs a pump light 560 having a predetermined wavelength, and the WSC 520 outputs the inputted pump light 560 to the gain medium 510.

The gain medium 510 is pumped in a forward direction by the pump light 560, and the gain medium 510 outputs created ASE lights 570, 575 through both terminals of the gain medium 510.

ASE light 575, which has been outputted forward of the gain medium 510, is outputted to the exterior through a second output terminal 555 of the broadband light source 500 after passing through the ISO 545. ASE light 570, which has been outputted in a backward direction of the gain medium 510, is outputted to the exterior through a first output terminal 550 of the broadband light source 500 after passing through the WSC 520 and the first ISO 540.

As explained above, the broadband light source according to the present invention outputs ASE light to the exterior through the first and second output terminals, so intensity of output light and output efficiency of the broadband light are improved. Therefore, the broadband light source is adaptable for a WDM-PON and can easily measure characteristics of optical devices for optical communication.

While the invention has been shown and described with reference to certain preferred embodiments. thereof, it will be understood by those skilled in the art that various changes in form and details may be made therein without departing from the spirit and scope of the invention as defined by the appended claims.

## Claims

1. A broadband light source (200, 300, 400, 500) having a dual port structure, the broadband light source (200, 300, 400, 500) comprising:
a gain medium (210, 310, 410, 510) having two terminals, the gain medium (210, 310, 410, 510) being pumped by inputted pump light (260, 265, 360, 365, 460, 560) for outputting amplified spontaneous emission light (270, 275, 370, 375, 470, 475, 570, 575) through both terminals;
first and second output terminals (250, 255, 350, 355, 450, 455, 550, 555) leading to an exterior of the broadband light source (200, 300, 400, 500); and
a pumping section for the pumping of the gain medium (210, 310, 410, 510), wherein the broadband light source (200, 300, 400, 500) outputs the amplified spontaneous emission light (270,275, 370, 375, 470, 475, 570, 575) through said both terminals, through said first and second output terminals (250, 255, 350, 355, 450, 455, 550, 555), and out to said exterior.

2. The broadband light source (200, 300, 400, 500) as claimed in claim 1, wherein the pumping section includes:
a pump light source (230, 330, 430, 530) for outputting pump light having a predetermined wavelength; and
a wavelength-selective coupler (220, 320, 420, 520) for outputting inputted pump light (260, 360, 460, 560) to the gain medium (210, 310, 410, 510), wherein the wave-length selective coupler (220, 320, 420, 520) is connected with one terminal of the gain medium (210, 310, 410, 510).

3. The broadband light source (200, 300) as claimed in claim 2, wherein the pumping section includes:
another pump light source (235, 335) for outputting pump light having a predetermined wavelength; and
another wavelength-selective coupler (225, 325) for outputting inputted pump light (265, 365) to the gain medium (210, 310), wherein the other wavelength-selective coupler (225, 325) is connected with another terminal of the gain medium (210, 310).

4. A broadband light source (200, 300) as claimed in claim 3, wherein the pumping section is configured such that the gain medium (210, 310) is pumped in opposite directions by the first and second pump lights (260, 265, 360, 365), respectively.

5. A broadband light source (200, 400, 500) as claimed in any one of the claims 1 to 4, further comprising:
a first isolator (240, 440, 540), which is connected with said first output terminal (250, 450, 550), for allowing inputted amplified spontaneous emission light (270, 470, 570) to pass in a given direction and for isolating light inputted into the first isolator (240, 440, 540) in a direction reverse to said given direction; and
a second isolator (245, 445, 545), which is connected with said output terminal (255, 455, 555), for allowing inputted amplified spontaneous emission light (275, 475, 575) to pass in a particular direction and for isolating light inputted into the second isolator (245, 445, 545) in a direction reverse to said particular direction.

6. A broadband light source (300) as claimed in any one of the claims 1 to 4, further comprising;
a first connector (340) located at said first output terminal (350) of the broadband light source (300) and having a first optical fiber formed with a tip portion inclined in such a manner that an amount of light inputted into the gain medium (310) after reflecting from the inclined tip portion is decreased; and
a second connector (345) located at said second output terminal (355) of the broadband light source (300) and having a second optical fiber formed with a tip portion inclined in such a manner that an amount of light inputted into the gain medium (310) after reflecting from the inclined tip portion of the second optical fiber is decreased.

7. A broadband light source (200, 300, 400, 500) as claimed in any one of the preceding claims, wherein the gain medium (210, 310, 410, 510) includes a rare-earth element doped optical fiber.

8. The broadband light source (100, 300, 400, 500) as claimed in any one of the preceding claims, wherein the pumping section includes:
a pump light source (230, 235, 330, 335, 430, 530) for outputting pump light having a predetermined wavelength; and
a wavelength-selective coupler (220, 225, 320, 325, 420, 520) for outputting, in a given direction, inputted pump light to the gain medium (210, 310, 410, 510), the gain medium (210, 310, 410, 510) is configured for outputting light in a direction reverse to said given direction.

9. The broadband light source as claimed in any one of the preceding claims, wherein the pumping section includes:
a pump light source (230, 235, 330, 335, 430, 530) for outputting pump light having a predetermined wavelength; and
a wavelength-selective coupler (220, 225, 320, 325, 420, 520) for outputting, in a given direction, inputted pump light to the gain medium (210, 310, 410, 510), the gain medium (210, 310, 410, 510) is configured for outputting light in said given direction.

10. A method for providing a broadband light source (200, 300, 400, 500) having a dual port structure, said method comprising the steps of:
providing a gain medium (210, 310, 410, 510) having two terminals;
pumping the gain medium (210, 310, 410, 510) by inputting pump light (260, 265, 360, 365, 460, 560) for outputting amplified spontaneous emission light (270, 275, 370, 375, 470, 475, 570, 575) through both terminals to cause the broadband light source (200, 300, 400, 500) to output the amplified spontaneous emission light (270, 275, 370, 375, 470, 475, 570, 575) through said both terminals and through first and second output terminals (250, 255, 350, 355, 450, 455, 550, 555) that lead to an exterior of the broadband light source (200, 300, 400, 500).

11. The method as claimed in claim 10, wherein the pumping step includes the step of outputting by a first light source (230, 330, 430, 530) to the gain medium (210, 310, 410, 510) first pump light having a predetermined wavelength, wherein the gain medium (210, 310, 410, 510) is pumped in a reverse direction by the first pump light (260, 360, 460, 560).

12. The method as claimed in claim 11, wherein the pumping step further includes the step of outputting by a second light source (235, 335) to the gain medium (210, 310) second pump light (265, 365) having a predetermined wavelength, wherein the gain medium (210, 310) is pumped in a forward direction by the second pump light.

13. The method as claimed in claim 10, wherein the pumping step includes the step of outputting to the gain medium (210, 310, 410, 510) pump light (260, 265, 360, 365, 460, 560) having a predetermined wavelength, wherein the gain medium (210, 310, 410, 510) is pumped in a forward direction by the pump light (260, 265, 360, 365, 460, 560).

14. The method as claimed in claim 10 or 13, wherein the pumping step includes the steps of:
providing a first pump light source (230, 330) for outputting first pump light having a predetermined wavelength;
providing a first wavelength-selective coupler (220, 320) for outputting inputted first pump light to the gain medium (210, 310);
providing a second pump light source (235, 335) for outputting second pump light having a predetermined wavelength; and
providing a second wavelength-selective coupler (225, 325) for outputting inputted second pump light to the gain medium (210, 310), whereby the gain medium (210, 310) is pumped in opposite directions by the first and second pump lights (260, 265, 360, 365), respectively.

15. The method as claimed in any one of the claims 10 to 14, further comprising the steps of:
providing a first isolator (240, 440, 540), which is connected with said first output terminal (250, 450, 550), for allowing inputted amplified spontaneous emission light (270, 470, 570) to pass in a given direction and for isolating light inputted into the first isolator (240, 440, 540) in a direction reverse to said given direction; and
providing a second isolator (245, 445, 545), which is connected with said second output terminal (255, 455, 555), for allowing inputted amplified spontaneous emission light (275, 475, 575) to pass in a particular direction and for isolating light inputted into the second isolator (245, 445, 545) in a direction reverse to said particular direction.

16. The method as claimed in any one of the claims 10 to 14, said method further comprising the steps of;
providing a first connector (340) located at said first output terminal (350) of the broadband light source (300) and having a first optical fiber formed with a tip portion inclined in such a manner that an amount of light inputted into the gain medium (310) after reflecting from the inclined tip portion is decreased; and
providing a second connector (345) located at said second output terminal (355) of the broadband light source (300) and having a second optical fiber formed with a tip portion inclined in such a manner that an amount of light inputted into the gain medium (310) after reflecting from the inclined tip portion of the second optical fiber is decreased.

17. The method as claimed in any one of the claims 10 to 16, wherein the gain medium (210, 310, 410, 510) includes a rare-earth element doped optical fiber.

18. The method as claimed in any one of the claims 10 to 17, wherein the pumping step includes the steps of:
outputting to the gain medium (210, 310, 410, 510), in a given direction, pump light having a predetermined wavelength; and
outputting, from the gain medium (210, 310, 410, 510), light in a direction reverse to said given direction.

19. The method as claimed in any one of the claims 10 to 18, wherein the pumping step includes the steps of:
outputting to the gain medium (210, 310, 410, 510), in a given direction, pump light having a predetermined wavelength; and
outputting, from the gain medium (210, 310, 410, 510), light in said given direction.
